# EUROPEAN PATENT SPECIFICATION

(11) **EP 2 562 448 B1**
(45) Date of publication and mention of the grant of the patent: **21.11.2018**
(21) Application number: 11772014.4
(22) Date of filing: 19.04.2011
(51) Int. Cl.: F16J 9/06, F02F 5/00, F16J 9/26, F16J 9/20

(54) **OIL RING FOR INTERNAL COMBUSTION ENGINE**
ÖLRING FÜR EINEN VERBRENNUNGSMOTOR
SEGMENT RACLEUR POUR MOTEUR À COMBUSTION INTERNE

(30) Priority: 19.04.2010 JP 2010096385
(43) Date of publication of application: 27.02.2013
(73) Proprietor: Nippon Piston Ring Co., Ltd., Saitama-shi Saitama 338-8503 (JP)
(72) Inventor: MIYAMOTO, Mamoru, Saitama City, Saitama 338-8503 (JP); SHIBATA, Shiro, Saitama City, Saitama 338-8503 (JP); YOKOKAWA, Hiromichi, Saitama City, Saitama 338-8503 (JP); OGAWA, Katsuaki, Saitama City, Saitama 338-8503 (JP)
(74) Representative: Grünecker Patent- und Rechtsanwälte PartG mbB
(86) International application number: PCT/JP2011/059642
(87) International publication number: WO 2011/132679

(56) References cited:
- EP-A1- 0 173 499
- WO-A1-2008/153041
- JP-A- 9 144 881
- JP-A- 9 210 203
- JP-A- 2002 521 257
- JP-A- 2008 291 991
- JP-A- 2010 054 039
- JP-A- 2010 060 126
- JP-A- 2010 216 628
- JP-U- 58 172 036
- US-A- 5 820 131

## Description

### [Technical Field]

The present invention relates to a two-piece internal combustion engine oil ring which is composed of an oil ring main body and a coil expander.

### [Background Art]

There has been a need for piston rings used in an internal combustion engine which have achieved lower friction against a cylinder inner wall surface in order to implement smooth reciprocation of a piston in a cylinder in response to market demand for improvement in fuel efficiency. Likewise, for internal combustion engine oil rings responsible for scraping excess engine oil from a cylinder inner wall surface and letting the excess oil flow down to an underside of a piston, width-reducing technology for reduction in the axial width of an oil ring main body is being pursued to achieve improvement in fuel efficiency by reducing frictional force against a cylinder inner wall surface and reduction in the amount of oil consumption.

Note that although reduction in the width of an oil ring can improve the ability to track the inner wall surface of a cylinder and reduce the amount of oil consumption, it also reduces tension of the oil ring too much to cause deterioration in oil-scraping performance. Examples of an internal combustion engine oil ring supporting such width-reducing technology include one which is composed of two pieces, i.e., an oil ring main body and a coil expander (hereinafter referred to as a two-piece oil ring). The coil expander is intended to improve the oil-scraping performance of the oil ring by pressing and biasing the oil ring main body radially outward. The oil ring main body is composed of an upper rail and a lower rail constituting an upper portion and a lower portion of the oil ring main body and a web connecting the rails. Respective outer peripheral sliding surfaces of the upper rail and lower rail slide over a cylinder inner wall surface through an oil film when a piston reciprocates.

In the two-piece oil ring, however, the coil expander is arranged in intimate contact with the inner periphery of the oil ring main body and close most of oil return holes formed in the oil ring main body. This may inhibit oil scraped by the upper rail and lower rail from escaping quickly toward a backside of the oil ring. Note that oversized oil return holes formed in an oil ring main body of a two-piece oil ring may cause reduction in the strength of the oil ring main body. For this reason, there has been a need for a two-piece oil ring which has achieved reduction in oil ring axial width but stably retains, for a long period, the function of scraping excess oil from a cylinder inner wall surface and letting the excess oil flow down to an underside of a piston and can achieve reduction in the amount of oil consumption.

For example, Patent Literature 1 (Japanese Patent Laid-Open No. 61-45172) discloses an oil ring with a coil expander (a so-called two-piece oil ring) for scraping excess oil from a cylinder inner wall surface. More specifically, Patent Literature 1 discloses "an oil ring with a coil expander including an oil-scraping oil ring made of steel and having a generally I-shaped cross-section, the oil-scraping oil ring being composed of upper and lower side rails which are a mass of rigidity and a thin web connecting the upper and lower side rails and having a large number of oil vent holes, the oil-scraping oil ring having a peripheral groove for receiving scraped oil along an outer periphery and a peripheral groove for receiving an annular coil expander along an inner periphery, the coil expander being in contact with the upper and lower side rails substantially at only two points as seen in cross-section, the coil expander being spaced from the web to provide a predetermined slight gap therebetween at a part other than the contact points."

Patent Literature 2 (Japanese Patent Laid-Open No. 2006-194272) discloses a wire material for an oil ring used in an oil ring which has improved oil circulation. More specifically, Patent Literature 2 discloses "a wire material for an oil ring having an oil through-hole for letting oil flow at least from one side to another formed therein and used as an oil ring of a piston for an internal combustion engine or the like provided with the oil through-hole, wherein the oil through-hole includes a tapered portion with at least one of opposing side walls of the oil through-hole substantially inclined with respect to a direction in which the oil flows." Note that the wire material for an oil ring according to Patent Literature 2 preferably includes a pair of flange portions and a web portion connecting the flange portions, the web portion having an oil through-hole formed therein, when the wire material for an oil ring is used as a two-piece oil ring.

### [Citation List]

### [Patent Literature]

[Patent Literature 1]
   Japanese Patent Laid-Open No. 61-45172
[Patent Literature 2]
   Japanese Patent Laid-Open No. 2006-194272

**Further prior art is known from document** EP 0 173 499 A1**.**

### [Summary of Invention]

### [Technical Problem]

Although a technique for providing a gap formed between the oil ring main body and the coil expander is disclosed in relation to the oil ring described in Patent Literature 1, the size of a gap required is not definite, and those skilled in the art have considerable difficulties in practicing the technique. Note that if a gap formed between the oil ring main body and the coil expander is excessively large to reduce an oil ring radial width of the web constituting the oil ring main body, the oil ring main body is likely to be deformed during machining. If the oil ring main body is deformed, pressing force against the cylinder inner wall surface is locally reduced, and a part of oil is left unscraped. This is likely to cause increase in the amount of oil consumption. The local reduction in pressing force against the cylinder inner wall surface in the oil ring also causes an upward flow of oil, and oil enters a cylinder combustion chamber of an engine. The oil may burn together to emit black smoke. Note that if tension of the oil ring is increased in order to solve the problem, friction between the cylinder inner wall surface and the oil ring becomes too large to inhibit smooth reciprocation of a piston.

In the oil ring in Patent Literature 1, since the outer peripheral shape in cross-section in an oil ring axial direction on the inner periphery side of the oil ring main body is a generally tapered shape, the coil expander and the upper and lower side rails are in contact substantially at only two points. As described above, in the oil ring in Patent Literature 1, the oil ring main body and the coil expander are in contact substantially at only two points as seen in cross-section in the oil ring axial direction. Accordingly, wear is likely to be promoted at the contacts, and there is variation in pressing force of the oil ring against the cylinder inner wall surface in a circumferential direction of the oil ring. Note that if there is large 1variation in pressing force against the cylinder inner wall surface in the circumferential direction of the oil ring, a portion at high surface pressure appears in a contact surface between an oil ring outer peripheral surface and the cylinder inner wall surface to cut a lubricating oil film and causes wear in both the members, which is undesirable.

Although the wire material for an oil ring described in Patent Literature 2 is shaped so as to receive a coil spring in a generally semicircular recess on the inner periphery side of an oil ring main body constituted by the pair of flange portions and the web portion connecting the flange portions, no gap is formed between the generally semicircular recess and the coil spring. Accordingly, if the wire material for an oil ring in Patent Literature 2 is used as an oil ring, a coil spring comes into intimate contact with an oil ring main body to close most of oil return holes formed in the oil ring main body. As a result, the oil ring using the wire material for an oil ring in Patent Literature 2 cannot let oil scraped by an outer periphery of the oil ring escape quickly toward a backside of the oil ring, and the oil-scraping function of the oil ring is deteriorated, which leads to increase in the amount of oil consumption. Additionally, although an angle of the tapered portion is disclosed in relation to the oil through-hole formed in the wire material for an oil ring, specific dimensions (an opening width and an opening height) of the oil through-hole are not set. More specifically, if an opening of the oil through-hole has a small area when the wire material for an oil ring in Patent Literature 2 is used as an oil ring, sludge is more likely to plug the hole, and the wire material for an oil ring in Patent Literature 2 cannot always be said to achieve sufficient reduction in the amount of oil consumption.

From the foregoing, the present invention has as its object to provide an internal combustion engine oil ring which stably retains, for a long period, the function of scraping excess oil from a cylinder inner wall surface and letting the excess oil flow down to an underside of a piston and ensures reduction in the amount of oil consumption when an internal combustion engine is driven.

### [Solution to Problem]

After intensive investigations, the present inventors have solved the above-described problems by forming an oil ring main body so as to have a shape satisfying predetermined conditions. The present invention will be described below.

An internal combustion engine oil ring according to the present invention includes an oil ring main body having a generally I shape in cross-section in an oil ring axial direction and a coil expander arranged on the inner periphery side of the oil ring main body. The oil ring main body is composed of a first rail sliding on a cylinder inner wall surface, a second rail, and a web having a plurality of oil return holes for letting oil scraped from the cylinder inner wall surface by the first rail and second rail flow down to an underside of a piston, the oil ring main body includes, along an inner peripheral surface, a coil expander receiving recess having a generally semicircular shape in cross-section in the oil ring axial direction, the inner peripheral surface of the coil expander receiving recess has an oil return groove formed along an inner peripheral direction for smoothly returning scraped oil to the underside of the piston, and a cross-sectional shape of the oil return groove being composed of a straight line and a curved line continuous with the straight line in cross-section in the oil ring axial direction.

In the internal combustion engine oil ring according to the present invention, r2/r1 is preferably 0.8 to less than 1.0, where r1 is a radius of curvature in cross-section in the oil ring axial direction of the coil expander receiving recess in the oil ring main body and r2 is a radius of curvature in cross-section in the oil ring axial direction of the coil expander.

In the internal combustion engine oil ring according to the present invention, A/B is preferably 0.05 to 0.50, where A is an oil ring radial depth of the oil return groove and B is an oil ring radial width of the web before formation of the oil return groove in the oil ring main body.

In the internal combustion engine oil ring according to the present invention, the oil ring radial width B of the web constituting the oil ring main body before formation of the oil return groove is preferably not less than 0.3 mm.

In the internal combustion engine oil ring according to the present invention, the oil return holes formed in the web constituting the oil ring main body preferably have an opening width of 0.5 mm to 5.0 mm in a circumferential direction of the oil ring main body and an opening height of 0.2 mm to 0.8 mm along the oil ring axial direction.

In the internal combustion engine oil ring according to the present invention, an oil ring axial width h1 of the oil ring main body is preferably 1.0 mm to 2.5 mm.

In the internal combustion engine oil ring according to the present invention, the ratio of tension to a cylinder bore of the oil ring is preferably 0.05 N/mm to 0.5 N/mm.

In the internal combustion engine oil ring according to the present invention, of a curved line in cross-section in the oil ring axial direction of the oil return groove formed in the oil ring main body, a curved line extending from the coil expander receiving recess so as to be continuous with the coil expander receiving recess preferably has a radius of curvature of 0.01 to 0.30 mm.

In the internal combustion engine oil ring according to the present invention, C/(E-C) is preferably 0.1 to 1.2, where E is the pitch of the oil return holes in the web constituting the oil ring main body in a circumferential direction of the web and C is a length in the circumferential direction of the web of the oil return holes.

### [Advantageous Effects of Invention]

In an oil ring according to the present invention, an oil ring main body is formed so as to have a shape satisfying conditions specified in the present invention. This configuration allows smooth oil return to an underside of a piston and long-term stable inhibition of variation in pressing force of the oil ring against a cylinder inner wall surface. That is, use of the oil ring according to the present invention ensures reduction in the amount of oil consumption and achieves improvement in fuel efficiency in a gasoline engine for an internal combustion engine or a Diesel engine mainly used in an automobile.

### [Brief Description of Drawings]

[Figure 1] Figure 1 is a perspective view of a two-piece oil ring according to the present invention which is composed of an oil ring main body and a coil expander arranged along an inner periphery of the oil ring main body.
[Figure 2] Figure 2 is a cross-sectional view illustrating the internal combustion engine oil ring according to the present invention taken in a piston axial direction for explaining a state in which the internal combustion engine oil ring is fit in an oil ring groove in a piston.
[Figure 3] Figure 3 is a main portion perspective view for explaining the inner peripheral shape of the oil ring main body according to the present invention.
[Figure 4] Figure 4 is a main portion perspective view for explaining the radius of curvature of a coil expander receiving recess of the oil ring main body according to the present invention.
[Figure 5] Figure 5 is a cross-sectional view illustrating an oil return groove formed in the oil ring main body according to the present invention which has a different shape from that of an oil return groove shown in Figure 2, taken in an oil ring axial direction.
[Figure 6] Figure 6 is a main portion front view as seen from the radially outer side for explaining the shape of the oil return hole of the oil ring main body according to the present invention.
[Figure 7] Figure 7 is a cross-sectional view showing a state in which an outer surface of the oil ring main body according to the present invention is subjected to nitriding, taken in the oil ring axial direction.
[Figure 8] Figure 8 is a graph showing the relation between the shape in cross-section in an oil ring axial direction of an oil return groove and an oil consumption amount ratio when an oil ring axial width is 2.00 mm.
[Figure 9] Figure 9 is a graph showing the relation between the shape in cross-section in an oil ring axial direction of an oil return groove and an oil consumption amount ratio when an oil ring axial width is 1.50 mm.
[Figure 10] Figure 10 is a graph showing the relation between an oil ring radial width of a web constituting the oil ring main body and produced stress.

### [Description of Embodiment]

The present invention will be described below in detail in the context of a preferred embodiment of an internal combustion engine oil ring according to the present invention with reference to the drawings.

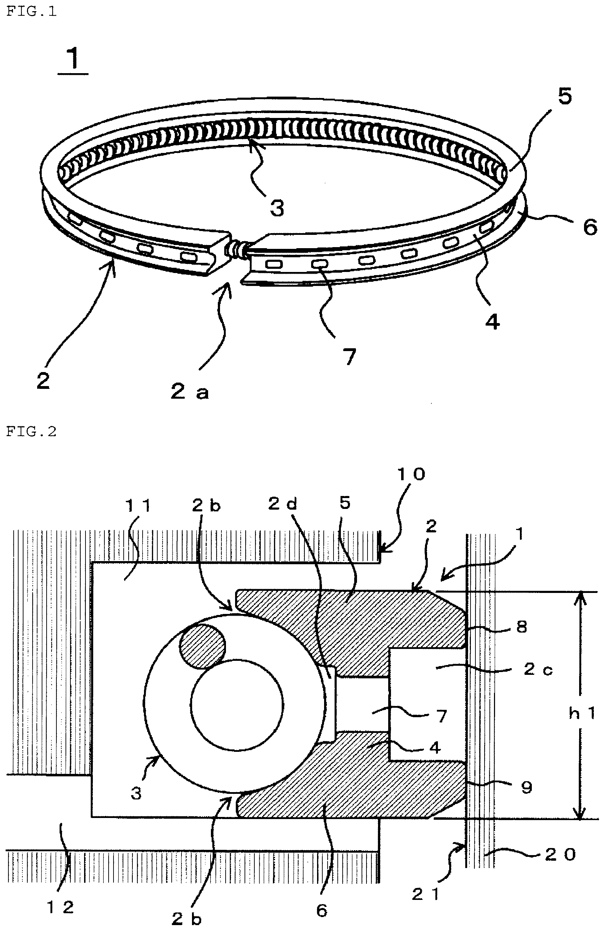

Figure 1 is a perspective view of a two-piece oil ring according to the present invention which is composed of an oil ring main body and a coil expander arranged along an inner periphery of the oil ring main body. As shown in Figure 1, a two-piece oil ring 1 is composed of an oil ring main body 2 and a coil expander 3. The oil ring main body 2 is a ring having a generally I-shaped cross-section and includes a gap 2a. A first rail 5 on the upper side, a second rail 6 on the lower side, and a web 4 which connects the rails and is located at a middle portion of the oil ring main body 2 are integrated into the oil ring main body 2.

The first rail 5 and second rail 6 constituting the oil ring main body 2 according to the present invention are each formed in a generally circular shape in a circumferential direction of the two-piece oil ring 1. Respective outer peripheral sliding surfaces of the first rail 5 and second rail 6 come into contact with an inner wall surface of a cylinder through an oil film and slide in a piston axial direction. As shown in Figure 1, the web 4 also has a generally circular shape in the circumferential direction of the two-piece oil ring 1. The web 4 includes an oil return hole 7 formed so as to penetrate therethrough in a radial direction, and a plurality of oil return holes 7 are arranged in a circumferential direction. As shown in Figure 1, the coil expander 3 is obtained by bending a spiral spring into a circular arc. Although not shown, in the coil expander 3, a core wire for joining is used at a joint of the coil expander to form the joint and transform the spiral spring into an annular coil.

Figure 2 is a cross-sectional view illustrating the internal combustion engine oil ring according to the present invention taken in the piston axial direction for explaining a state in which the internal combustion engine oil ring is fit in an oil ring groove in a piston. As shown in Figure 2, at an inner peripheral surface of the oil ring main body 2, a coil expander receiving recess 2b is formed in a circumferential direction by the first and second rails 5 and 6 and the web 4. On the outer peripheral surface side of the oil ring main body 2, an outer peripheral groove 2c in a rectangular shape as seen in cross-section in an oil ring axial direction is formed by both the first and second rails 5 and 6 and the web 4.

As shown in Figure 2, in the internal combustion engine oil ring 1 according to the present invention, the coil expander receiving recess 2b has a generally semicircular shape as seen in cross-section in the oil ring axial direction, and the coil expander 3 is received in a state covered by the generally semicircular portion, as seen in cross-section in the oil ring axial direction. Accordingly, according to the internal combustion engine oil ring 1 according to the present invention, if the inner periphery of the oil ring main body 2 is formed in a circular arc shape, a large contact area can be obtained between the oil ring main body 2 and the coil expander 3, and stabilization of pressing force against a cylinder inner wall surface 21 can be achieved. The inner periphery of the oil ring main body 2 formed in a circular arc shape, as in the internal combustion engine oil ring 1 according to the present invention, makes pressing force against the cylinder inner wall surface unlikely to vary locally and makes oil unlikely to be left unscraped.

A flow of the oil-scraping function of the internal combustion engine oil ring 1 will be described step by step with reference to Figure 2. First, when a piston 10 reciprocates in a cylinder 20, outer peripheral sliding surfaces 8 and 9 of the first and second rails 5 and 6 of the oil ring main body 2 scrape excess oil adhering to the inner wall surface 21 of the cylinder 20. The scraped oil is received to remain temporarily in the outer peripheral groove 2c of the oil ring main body 2 and then flows to the coil expander receiving recess 2b through the oil return holes 7. The oil reaching the coil expander receiving recess 2b flows down to an underside of the piston 10 through an oil drain hole 12 which is formed so as to communicate with an oil ring groove 11 and is returned to an oil pan (not shown).

When the scraped oil is fed to the coil expander receiving recess 2b through the oil return holes 7 in the above-described flow of the oil-scraping function of the internal combustion engine oil ring 1, the oil is not blocked from flowing in the internal combustion engine oil ring 1 according to the present invention. This is because the internal combustion engine oil ring 1 according to the present invention has an oil return groove 2d formed between the oil ring main body 2 and the coil expander 3 and because the oil return groove 2d prevents the oil return holes 7 formed in the oil ring main body 2 from being closed. That is, even if the shape of a part on the coil expander side of the oil ring main body 2 is generally semicircular in the internal combustion engine oil ring 1 according to the present invention, the presence of the oil return groove 2d allows oil scraped by the internal combustion engine oil ring 1 to escape quickly to the oil drain hole 12 provided on the oil ring back side. This allows reduction in the amount of oil consumption.

Additionally, in the internal combustion engine oil ring 1 according to the present invention, the outer peripheral shape of the oil return groove 2d formed in the oil ring main body 2 is composed of a straight line and a curved line continuous with the straight line in cross-section in the oil ring axial direction. The configuration can inhibit oil scraped by the oil ring 1 from remaining in the oil return groove 2d. Accordingly, in the internal combustion engine oil ring 1 according to the present invention, the outer peripheral shape of the oil return groove 2d formed in the oil ring main body 2 that is composed of a straight line and a curved line continuous with the straight line in cross-section in the oil ring axial direction allows oil scraped by the oil ring 1 to escape quickly to the oil drain hole 12 provided on the oil ring back side. Note that the internal combustion engine oil ring 1 according to the present invention effectively prevents oil sludge from remaining and effectively inhibits oxidation because an opening edge of the coil expander receiving recess 2b and an opening edge of the oil return hole 7 are formed so as to have a curved surface in the oil return groove 2d, as illustrated in Figure 2. The internal combustion engine oil ring 1 according to the present invention can stably produce, for a long period, the effect of reducing the amount of oil consumption.

In the internal combustion engine oil ring 1 according to the present invention, r2/rl is preferably 0.8 to less than 1.0, where r1 is the radius of curvature in cross-section in the oil ring axial direction of a curved surface except the oil return groove 2d of the coil expander receiving recess 2b in the oil ring main body 2 and r2 is the radius of curvature in cross-section in the oil ring axial direction of the outer diameter of the coil expander 3.

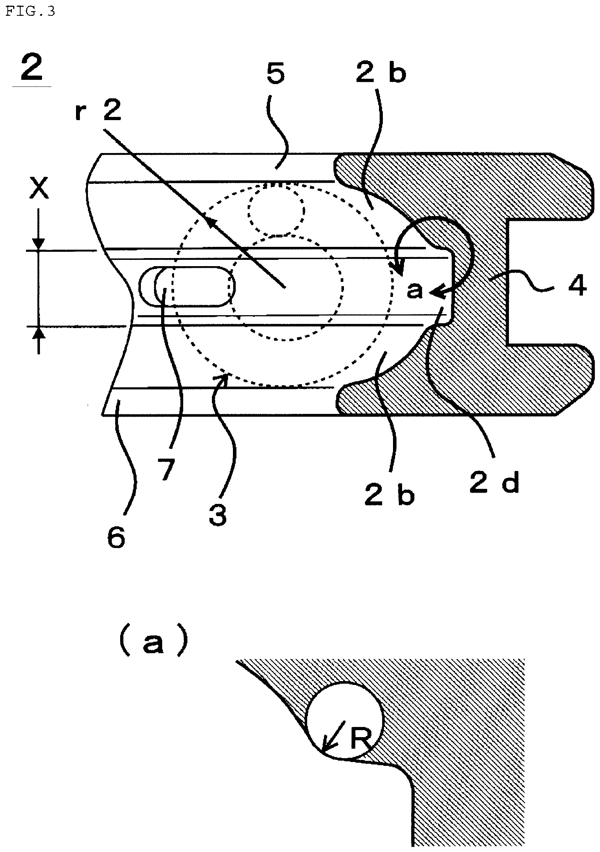

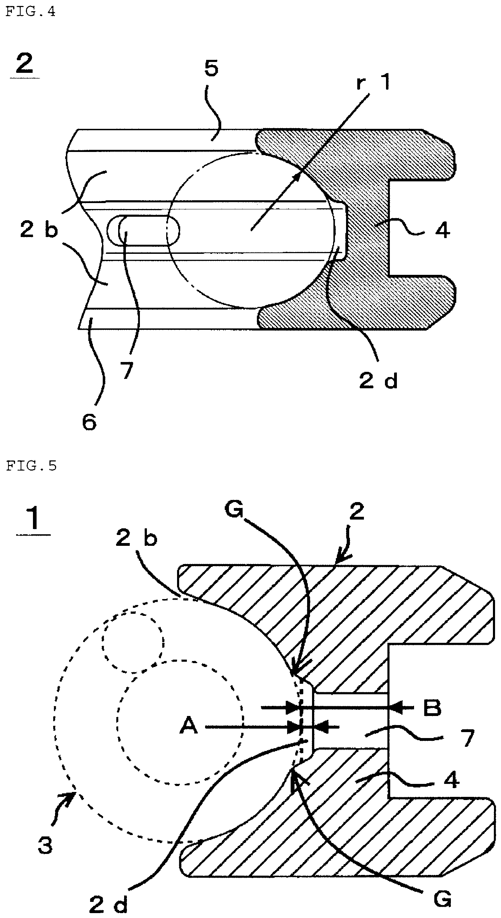

Figure 3 is a main portion perspective view for explaining the inner peripheral shape of the oil ring main body according to the present invention. Figure 4 is a main portion perspective view for explaining the radius of curvature of the coil expander receiving recess in the oil ring main body according to the present invention. In Figure 3, the outer diameter of the coil expander 3 is indicated by a broken line. As shown in Figures 3 and 4, r2/rl falls within the range of 0.8 to less than 1.0, where r1 is the radius of curvature in cross-section in the oil ring axial direction of the curved surface except the oil return groove 2d of the coil expander receiving recess 2b and r2 is the radius of curvature in cross-section in the oil ring axial direction of the outer diameter of the coil expander 3. This configuration allows obtainment of a larger contact area between the coil expander 3 and the coil expander receiving recess 2b and stabilization of pressing force of the oil ring 1 against the cylinder inner wall surface along the ring circumferential direction. If r2/r1 is less than 0.8, since the outer diameter of the coil expander 3 is small, the entire length to the outer diameter of the coil expander is long. This may lead to the fear of strain on the oil ring 1 to be combined and the fear of deterioration in piston assemblability. The outer diameter of the coil expander 3 may be so small that the coil expander 3 enters the oil return groove 2d of the oil ring main body. In this case, since a sufficiently large gap cannot be formed between the oil ring main body 2 and the coil expander 3, oil scraped by the oil ring 1 may not be smoothly discharged to the inner peripheral side of the oil ring 1 to cause increase in the amount of oil consumption. If r2/rl is more than 1.0, the coil expander 3 may interfere with the coil expander receiving recess 2b of the oil ring main body or may not fit in the coil expander receiving recess 2b.

In other words, the oil ring main body 2 according to the present invention satisfies a condition of the present invention regarding the relation of the radius r1 of curvature in cross-section in the oil ring axial direction of the curved surface except the oil return groove 2d of the coil expander receiving recess 2b with the radius r2 of curvature in cross-section in the oil ring axial direction of the outer diameter of the coil expander 3. This makes the received state of the coil expander in the circumferential direction of the oil ring unlikely to become unstable and allows effective inhibition of wear at an inner peripheral surface of the oil ring. Accordingly, in the internal combustion engine oil ring 1 according to the present invention, tension of the oil ring can be minimized to the extent that does not cause increase in the amount of oil consumption, which expands the possibility of oil ring design.

In the internal combustion engine oil ring 1 according to the present invention, A/B is preferably 0.05 to 0.50, where A is the oil ring radial depth of the oil return groove 2d and B is the oil ring radial depth of the web 4 before formation of the oil return groove 2d.

Figure 5 is a cross-sectional view illustrating an oil return groove formed in the oil ring main body according to the present invention which has a different shape from that of the oil return groove shown in Figure 2, taken in the oil ring axial direction. As shown in Figure 5, in the internal combustion engine oil ring 1 according to the present invention, A/B in the oil ring main body 2 is set to fall within the range of 0.05 to 0.50, where A is the oil ring radial depth of the oil return groove 2d and B is the oil ring radial depth (a width represented by "a13-a4" in JIS B 8032-1993, p. 21, Table 14 (enlarged view of X)) of the web 4 before formation of the oil return groove 2d. With the configuration, the rigidity of the internal combustion engine oil ring 1 according to the present invention can be maintained, and the product quality can be improved without variation in the shape of the oil ring main body 2 during machining. Note that a position which is the basis for the oil ring radial depth A of the oil return groove 2d and the oil ring radial width B of the web 4 before formation of the oil return groove 2d is indicated by a broken line (a tangent to an outer periphery of the coil expander 3 in Figure 5) in Figure 5.

Assume that A/B is less than 0.05, where A is the oil ring radial depth of the oil return groove 2d formed in the oil ring main body 2 and B is the oil ring radial width of the web 4 before formation of the oil return groove 2d in the internal combustion engine oil ring 1 according to the present invention. In this case, the oil ring radial depth A of the oil return groove 2d is too small with respect to the oil ring radial width B, and the function of returning oil to the underside of the piston cannot be sufficiently fulfilled. More specifically, in the case, the proportion of the oil return groove 2d in the oil ring main body 2 is too low. Each oil return hole 7 formed in the web 4 of the oil ring main body 2 is mostly closed by the coil expander 3, and oil passing through the oil return hole 7 may not be smoothly discharged to the inner periphery side of the oil ring main body 2. If A/B exceeds 0.50, the oil ring radial depth A of the oil return groove 2d is too large with respect to the oil ring radial width B, and the width of the web 4 is small. The oil ring main body 2 is likely to be deformed during machining, which leads to deterioration in the durability and oil-scraping function of the oil ring 1.

Note that the oil return groove 2d formed in the oil ring main body 2 according to the present invention can produce the effect of reducing the amount of oil consumption even if the oil return groove 2d is a groove having a depth so small that A/B is about 0.05, where A is the oil ring radial depth and B is the oil ring radial width of the web 4 before formation of the oil return groove 2d. In view of the balance between oil ring rigidity and oil consumption performance, A/B is preferably set to fall within the range of 0.05 to 0.50.

Note that, as illustrated in Figure 5, the shape of the oil return groove 2d formed in the oil ring main body 2 according to the present invention is not limited to the shape shown in Figure 2. In the cross-sectional view shown in Figure 5, a portion from a point indicated by G toward a bottom surface of the oil return groove 2d is formed so as to have a generally tapered shape instead of a linear shape. As described above, in the internal combustion engine oil ring 1 according to the present invention, side walls of the oil return groove 2d between the curved surface at the opening edge of the coil expander receiving recess 2b and the curved surface at the opening edge of each oil return hole 7 can also be inclined so as to estrange toward an opening of the coil expander receiving recess 2b. The internal combustion engine oil ring 1 according to the present invention effectively prevents oil sludge from remaining, effectively inhibits oxidation, and can stably produce, for a long period, the effect of reducing the amount of oil consumption, as long as the outer peripheral shape in cross-section in the oil ring axial direction of the oil return groove 2d formed in the oil ring main body 2 is composed of a straight line and a curved line continuous with the straight line.

In the internal combustion engine oil ring 1 according to the present invention, the oil ring radial width B of the web 4 constituting the oil ring main body 2 before formation of the oil return groove 2d is preferably not less than 0.3 mm.

In Figure 5, the oil ring radial width of the web 4 before formation of the oil return groove 2d is indicated by B. If the oil ring radial width B of the web 4 before formation of the oil return groove 2d is less than 0.3 mm in the internal combustion engine oil ring 1 according to the present invention, the width of the web 4 is too small, and the strength of the oil ring main body 2 is low. When such an oil ring is used in an internal combustion engine, the oil ring cannot have sufficient durability. The web 4 with a too small width is likely to cause deformation during machining of the oil ring main body 2, and stabilization of the oil-scraping function of the oil ring 1 cannot be achieved.

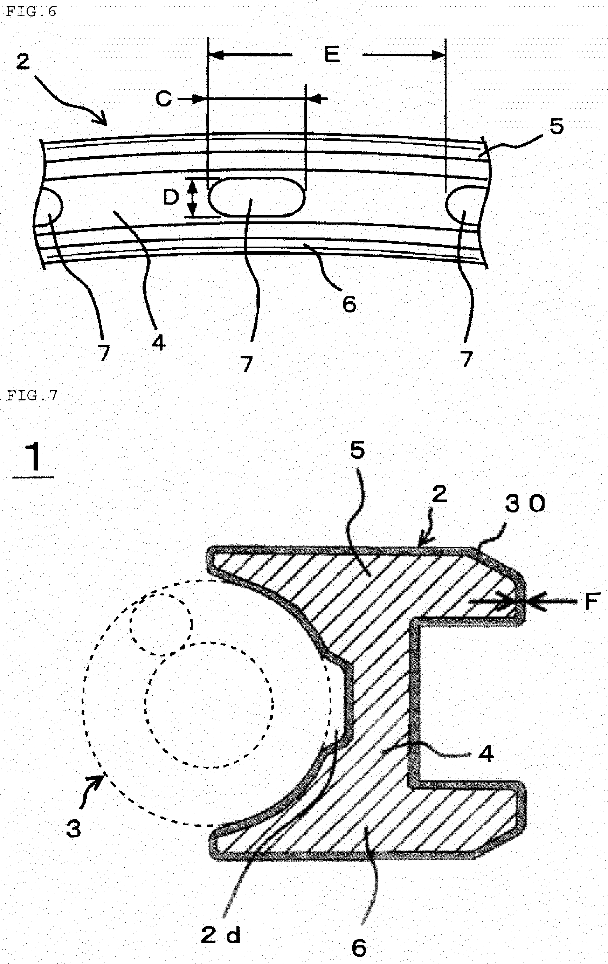

In the internal combustion engine oil ring 1 according to the present invention, the oil return holes 7 formed in the web 4 constituting the oil ring main body 2 preferably have an opening width (a width indicated by C in Figure 6) along the circumferential direction of the oil ring main body 2 of 0.5 mm to 5.0 mm and an opening height (a height indicated by D in Figure 6) along the oil ring axial direction of 0.2 mm to 0.8 mm.

Figure 6 is a main portion front view as seen from the outer side in an oil ring radial direction for explaining the shape of the oil return holes in the oil ring main body according to the present invention. Referring to Figure 6, if the opening width C is smaller than 0.5 mm or the opening height D is smaller than 0.2 mm in the oil ring main body 2 according to the present invention, an opening area of each oil return hole 7 is too small, and oil scraped by the oil ring 1 cannot be quickly discharged to the oil drain hole 12 provided on the oil ring back side. If the opening width C is larger than 5.0 mm or the opening height D is larger than 0.8 mm in the oil ring main body 2 according to the present invention, the area of the oil return hole 7 is too large, and the strength of the oil ring main body 2 is low.
When such an oil ring is used in an internal combustion engine, the oil ring cannot have sufficient durability. The oil return hole 7 with a too large area is likely to cause deformation during machining of the oil ring main body 2, which leads to deterioration in the oil-scraping function. Note that the shape of each oil return hole 7 is not limited to one as shown in Figure 6, i.e., a shape which is obtained by replacing sides corresponding to the opening height D at two ends of a rectangle with arcuate sides having a fixed radius R of curvature. For example, various shapes such as a rectangular shape, a circular shape, an elliptical shape, and a shape with curved sides corresponding to the opening height D can be appropriately selected and used as long as requirements for an oil ring are satisfied.

In the internal combustion engine oil ring 1 according to the present invention, an oil ring axial width (a width indicated by h1 in Figure 2) of the oil ring main body 2 is preferably 1.0 mm to 2.5 mm.

If the oil ring axial width h1 of the oil ring main body 2 is smaller than 1.0 mm, as shown in Figure 2, the contact areas of the outer peripheral sliding surfaces 8 and 9 with the inner wall surface 21 of the cylinder 20 is small, which may cause reduction in the strength of the oil ring main body 2. Additionally, each oil return hole 7 in the oil ring 1 cannot have a large opening area, and scraped oil is more unlikely to flow from the outer peripheral groove 2c in the oil ring main body 2 to the coil expander receiving recess 2b on the inner periphery side through the oil return holes 7. As a result, the amount of oil consumption increases. If the oil ring axial width h1 of the oil ring main body 2 of the internal combustion engine oil ring 1 is larger than 2.5 mm, pressing force of the oil ring main body 2 against the cylinder inner wall surface 21 decreases unless tension of the oil ring 1 is increased. This increases the amount of oil consumption.

In the internal combustion engine oil ring 1 according to the present invention, the ratio of tension of the oil ring 1 to a cylinder bore is preferably 0.05 N/mm to 0.5 N/mm.

In the internal combustion engine oil ring 1 according to the present invention, the ratio of the tension to the cylinder bore (not shown) (a value calculated by [oil ring tension (N)]/[cylinder bore (mm)]) is set to 0.05 N/mm to 0.5 N/mm. If the ratio of the tension to the cylinder bore is lower than 0.05 N/mm, pressing force of the outer peripheral sliding surfaces 8 and 9 of the oil ring main body 2 against the inner wall surface 21 of the cylinder 20 is insufficient. Accordingly, the outer peripheral sliding surfaces 8 and 9 cannot sufficiently scrape excess oil to cause increase in the amount of oil consumption. If the ratio of the tension to the cylinder bore is higher than 0.5 N/mm, the pressing force of the outer peripheral sliding surfaces 8 and 9 against the inner wall surface 21 of the cylinder 20 is too large, and frictional force is large, which causes reduction in fuel efficiency. Generally, frictional force between a cylinder and an oil ring tends to be proportional to the magnitude of tension of an oil ring.

In the internal combustion engine oil ring 1 according to the present invention, of a curved line in cross-section in the oil ring axial direction of the oil return groove 2d formed in the oil ring main body 2, a curved line extending from the coil expander receiving recess 2b so as to be continuous therewith preferably has a radius of curvature of 0.01 to 0.30 mm.

Figure 3(a) illustrates a portion surrounded by a line a in Figure 3. Of the curved line in cross-section in the oil ring axial direction of the oil return groove 2d formed in the oil ring main body 2 according to the present invention, the curved line extending from the coil expander receiving recess 2b so as to be continuous therewith has a radius of curvature (R in Figure 3(a)) of 0.01 to 0.30 mm. This configuration inhibits wear and damage of the coil expander 3 in contact with a portion corresponding to the extending curved line and can achieve reduction in the amount of oil consumption. If the radius R of curvature of the extending curved line is less than 0.01 mm, the coil expander 3 is likely to be worn and damaged, and tension of the coil expander is low. This increases the amount of oil consumption and causes deterioration in gas-sealing performance. If the radius R of curvature of the extending curved line exceeds 0.30 mm, the contact area of the coil expander 3 with the coil expander receiving recess 2b is small, and stabilization of pressing force of the oil ring 1 against the cylinder inner wall surface 21 is difficult.

In the internal combustion engine oil ring 1 according to the present invention, the pitch (a pitch indicated by E in Figure 6) of the oil return holes 7 in the web 4 constituting the oil ring main body 2 in the circumferential direction of the web 4 is preferably 3.5 mm to 10.0 mm.

In Figure 6, the pitch of the oil return holes 7 in the web 4 constituting the oil ring main body 2 in the circumferential direction of the web 4 is indicated by E. In the internal combustion engine oil ring 1 according to the present invention, the pitch E falls within the range of 3.5 mm to 10.0 mm. This allows improvement in the durability and oil consumption performance of the oil ring 1. If the pitch E is less than 3.5 mm, the spacing between the oil return holes 7 in the web 4 is too small, and the strength of the oil ring main body 2 is low. This causes deterioration in the durability of the oil ring 1, which is undesirable. If the pitch E exceeds 10.0 mm, the spacing between the oil return holes 7 in the web 4 is too large, and oil scraped by the oil ring 1 cannot escape to the piston back side. This causes increase in the amount of oil consumption.

In the internal combustion engine oil ring 1 according to the present invention, C/(E-C) is preferably 0.1 to 1.2, where E is the pitch of the oil return holes 7 in the web 4 constituting the oil ring main body 2 in the circumferential direction of the web 4 and C is the length of the oil return hole in the circumferential direction of the web 4.

In Figure 6, the pitch in the circumferential direction of the web 4 described above is indicated by E, and the length of the oil return hole 7 in the circumferential direction of the web 4 is indicated by C. In the internal combustion engine oil ring 1 according to the present invention, the relation "C/(E-C)" of the pitch E with the length C of the oil return hole 7 in the circumferential direction of the web 4 falls within the range of 0.1 to 1.2. This increases stability when improving the durability and oil consumption performance of the oil ring 1. If the relation "C/(E-C)" of the pitch E with the length C of the oil return hole in the circumferential direction of the web 4 is less than 0.1, the spacing between the oil return holes 7 in the web 4 is large, and oil scraped by the oil ring 1 cannot escape to the piston back side. This causes increase in the amount of oil consumption. If the relation "C/(E-C)" of the pitch E with the length C of the oil return hole in the circumferential direction of the web 4 exceeds 1.2 mm, the spacing between the oil return holes 7 in the web 4 is small, and the strength of the oil ring main body is low. This may cause deterioration in the durability of the oil ring 1. Note that, in terms of the durability and oil consumption performance of the oil ring 1, the relation "C/(E-C)" is more preferably within the range of 0.2 to 1.0, and still more preferably within the range of 0.2 to 0.6.

In the internal combustion engine oil ring 1 according to the present invention, the thickness of a nitride layer is preferably set to 150 µm or less when an outer surface of the oil ring main body 2 is subjected to nitriding. Hardening of the outer surface by nitriding allows improvement in the durability of the oil ring main body 2. The outer surface is hardened because the oil ring main body 2 is required to have higher wear resistance due to recent increase in the speed of and the load on an internal combustion engine for an automobile. A steel material is mainly used as the material for the oil ring main body 2. As a result of nitriding, the oil ring main body 2 includes an extremely hard nitride layer made of a nitride that is the product of reaction with chromium or iron. That is, formation of a nitride layer on the surface of the oil ring main body 2 makes the oil ring main body 2 excellent in wear resistance and resistance to scuffing by the cylinder and allows provision of an internal combustion engine oil ring which can withstand application under harsher conditions. However, if the entire base material of the oil ring main body 2 is nitrided by nitriding, the oil ring main body 2 becomes too hard and brittle and has reduced breakage resistance. For this reason, the thickness of a nitride layer is preferably set to 150 µm or less when the oil ring main body 2 according to the present invention is subjected to nitriding.

Figure 7 is a cross-sectional view showing a state in which the outer surface of the oil ring main body according to the present invention is subjected to nitriding, taken in the oil ring axial direction. Figure 7 shows that a nitride layer 30 is formed on the outer surface of the oil ring main body 2. The thickness of the nitride layer 30 that is indicated by F in Figure 7 is preferably set to 150 µm or less.

Since the durability of an oil ring affects the magnitude of frictional force between oil ring outer peripheral sliding surfaces and a cylinder inner wall surface, the magnitude of tension of the oil ring is taken into consideration, as described above. The durability is also affected by a combination of metals to slide against each other. For example, if chromium materials or aluminum materials are used as the metal materials to slide against each other, scuffing is likely to occur. Accordingly, coating excellent in wear resistance is generally applied in view of metal materials concerned. An outer surface of an oil ring main body is subjected to nitriding for the same reason. It is also preferable in terms of wear resistance to apply a coating made of a chromium nitride (Cr₂N or CrN) or an ion-plating coating made of a mixture of a chromium nitride (Cr₂N or CrN) and chromium (Cr) to the oil ring outer peripheral sliding surfaces, as needed. Improvement in the durability of the oil ring can also be achieved by applying a chromium-boron nitride (Cr-B-N) coating, a DLC (Diamond Like Carbon) coating, or the like to the oil ring outer peripheral sliding surfaces.

The present invention will be described below specifically with reference to examples and comparative examples. Note that the present invention is not limited to the examples below.

### [Example 1]

In Example 1, an actual machine test was performed using a four cylinder gasoline engine with a displacement of 2,000 cc and a cylinder bore of 86 mm to check if there was a difference in the amount of oil consumption between an oil ring having an oil return groove at an inner peripheral surface in a coil expander receiving recess and an oil ring without an oil return groove. Note that the engine was operated at full load (WOT) and at 5,000 rpm for 10 hours. A 1st ring, a 2nd ring, and an oil ring were used in combination as piston rings. As the 1st ring, a ring made of 10Cr steel and having an axial width (h1) of 1.2 mm and a radial width (al) of 2.9 mm which had been subjected to gas nitriding was used.
As the 2nd ring, a ring made of an FC material and having an axial width (h1) of 1.2 mm and a radial width (al) of 3.4 mm was used.

10Cr steel, of which the 1st ring was made, and the FC material, of which the 2nd ring was made, will be described for confirmation. 10Cr steel here has a composition of 0.50% by mass of carbon, 0.21% by mass of silicon, 0.30% by mass of manganese, 10.1% by mass of chromium, 0.02% by mass of phosphorus, 0.01% by mass of sulfur, and the balance iron and unavoidable impurities and has been subjected to gas nitriding. The FC material here is a material having a composition of 3.41% by mass of carbon, 2.05% by mass of silicon, 0.65% by mass of manganese, 0.30% by mass of phosphorus, 0.08% by mass of sulfur, 0.10% by mass of chromium, 0.10% by mass of copper, and the balance iron and unavoidable impurities and corresponding to FC250.

As the oil ring, a two-piece internal combustion engine oil ring as described in the embodiment was used. In the oil ring used in Example 1, an axial width (h1) of an oil ring main body was set to 2.00 mm, an oil ring radial width (al) was set to 2.00 mm, and an oil ring radial width (a12) of the oil ring after arrangement of a coil expander was set to 2.74 mm. In the oil ring used in Example 1, of the shape of an oil return groove formed so as to be continuous with a coil expander receiving recess, the outer peripheral shape in cross-section in an oil ring axial direction is composed of a straight line and a curved line continuous with the straight line, and the oil return groove includes a curved surface (having a radius of curvature of 0.10 mm) extending from the coil expander receiving recess so as to be continuous therewith. In the oil ring of Example 1, A/B is 0.08, where A is the oil ring radial depth of the oil return groove and B is the oil ring radial width of a web before formation of the oil return groove. The value of A/B is within the range of 0.05 to 0.50, which is a condition of the present invention. In other words, the oil ring used in Example 1 has the specifications below. Note that more detailed settings of the oil ring used in Example 1 are shown in Table 1 below. Note that an oil ring axial width (X) of an oil return groove in the specifications and Table 1 below is a width indicated by X in Figure 3 (and so on).

Oil ring radial depth (A) of oil return groove : 0.04 mm
Oil ring radial width (B) of web before formation of oil return groove : 0.49 mm
Oil ring axial width (X) of oil return groove : 0.70 mm
Opening width (C) of oil return hole : 2.00 mm
Opening height (D) of oil return hole : 0.50 mm
Ratio of tension to cylinder bore : 0.24 N/mm

As the material for the oil ring main body here constituting the oil ring, so-called 8Cr steel having a composition of 0.70% by mass of carbon, 0.25% by mass of silicon, 0.30% by mass of manganese, 8.0% by mass of chromium, 0.02% by mass of phosphorus, 0.01% by mass of sulfur, and the balance iron and unavoidable impurities was used. When the oil ring was subjected to gas nitriding, a nitride layer (the layer indicated by F in Figure 7) at outer peripheral sliding surfaces was checked in cross-section in the oil ring axial direction. It was confirmed as a result of the checking that a nitride film having a thickness of 100 µm in an oil ring radial direction was formed. As the material for the coil expander, a material corresponding to SWOSC-V having a composition of 0.55% by mass of carbon, 1.41% by mass of silicon, 0.65% by mass of manganese, 0.68% by mass of chromium, 0.06% by mass of copper, 0.01% by mass of phosphorus, 0.01% by mass of sulfur, and the balance iron and unavoidable impurities was used.

In Example 1, so-called 8Cr steel was used as the material for the oil ring main body. Different materials are generally used according to car model and the like. For example, 10Cr steel and 13Cr steel higher in chromium content and 17Cr steel (corresponding to SUS440) still higher in chromium content are mainly used in Diesel cars whose engines are exposed to higher loads. Note that although SWRH and the like are suitably used as the material for the oil ring, in addition to 8Cr steel used in the example and 10Cr steel, 13Cr steel, and 17Cr steel described above, the material, however, is not limited to these materials.

How an oil ring according to the present invention is affected when the oil ring is subjected to nitriding will be briefly described. For example, when chromium steel is subjected to nitriding, nitrogen atoms enter into the steel through the surface, diffuse, and form a nitride layer. Nitrides in the nitride layer are mainly a compound of nitrogen with chromium, a compound of nitrogen with vanadium, and a compound of nitrogen with molybdenum or solid solutions obtained by dissolving iron in the compounds. Some of chromium atoms in the steel are dissolved in the base material to form a solid solution while others are present in chromium carbides. Since chromium has a stronger affinity for nitrogen than for carbon, nitrogen diffusing from the surface due to the nitriding reacts with a chromium carbide to produce a chromium nitride. For example, 13Cr steel and 17Cr steel are relatively high in chromium content. In the case of 13Cr steel or 17Cr steel, many hard chromium nitrides disperse for the above-described reason to obtain a nitride layer having a relatively high hardness, and excellent wear resistance and scuffing resistance are achieved. Additionally, nitriding requires a low processing cost and has lower environmental impact than chrome plating. Examples of the nitriding include liquid nitriding (salt bath nitriding) and gas nitriding. Note that inexpensive gas nitriding is preferably used as nitriding in the present invention. When a nitride layer is to be formed only at a part of an oil ring main body, a nitride layer can be formed at a part by the process of forming a nitride layer across the surface of the oil ring main body and then removing an unnecessary portion of the nitride layer by after-treatment, the process of, e.g., applying a nitriding inhibitor (e.g., water glass or nickel-phosphorus plating) to a portion where a nitride layer is not to be formed in advance as masking and then subjecting the oil ring main body to nitriding, or the like. Alternatively, a nitride layer can be formed by ion nitriding that can form a nitride layer at a part.

Note that the oil ring with the ratio of tension to the cylinder bore of 0.24 N/mm was used in Example 1 to check the amount of oil consumption. In Table 1, an oil consumption amount ratio in Example 1 is shown as the ratio to an oil consumption amount taken as "1" which was obtained from an actual machine test using an oil ring (Comparative Example 2 illustrated below) not satisfying the condition of the present invention. The oil consumption amount ratio in Example 1 obtained as a result was 0.78.

### [Example 2]

In Example 2, an actual machine test was performed using a four cylinder gasoline engine with a displacement of 1,500 cc and a cylinder bore of 73 mm to check if there was a difference in the amount of oil consumption between an oil ring having an oil return groove at an inner peripheral surface in a coil expander receiving recess and an oil ring without an oil return groove. In Example 2, the engine was driven under the same drive conditions as those in Example 1 to check how a difference in shape or the like between oil ring main bodies to be used affects characteristics of oil rings (their oil consumption performance). Like Example 1, a 1st ring, a 2nd ring, and an oil ring were used as piston rings. As the 1st ring, a ring made of 10Cr steel and having an axial width (h1) of 1.2 mm and a radial width (al) of 2.9 mm which had been subjected to gas nitriding was used, as in Example 1. As the 2nd ring, a ring made of an FC material and having an axial width (h1) of 1.2 mm and a radial width (al) of 3.4 mm was used, as in Example 1. As the oil ring of Example 2, a two-piece internal combustion engine oil ring was used, as in Example 1. Like Example 1, an oil ring whose oil ring main body was made of 8Cr steel and which had been subjected to gas nitriding (the thickness of a nitride layer that is indicated by F in Figure 7 was confirmed to be 100 µm) was used as the oil ring. A coil expander made of a material corresponding to SWOSC-V was used. The compositions of the 1st ring, 2nd ring, and oil ring used in Example 2 were set in the same manner as in Example 1. Note that the oil ring used in Example 2 was different in shape from that in Example 1.

In the oil ring used in Example 2, an axial width (h1) of the oil ring main body was set to 1.50 mm, an oil ring radial width (al) was set to 1.70 mm, and an oil ring radial width (a12) of the oil ring after arrangement of the coil expander was set to 2.14 mm. In the oil ring used in Example 2, of the shape of an oil return groove formed so as to be continuous with a coil expander receiving recess, the outer peripheral shape in cross-section in an oil ring axial direction is composed of a straight line and a curved line continuous with the straight line, and the oil return groove includes a curved surface (having a radius of curvature of 0.09 mm) extending from the coil expander receiving recess so as to be continuous therewith. In the oil ring of Example 2, A/B is 0.18, where A is the oil ring radial depth of the oil return groove and B is the oil ring radial width of a web before formation of the oil return groove. The value of A/B is within the range of 0.05 to 0.50, which is the condition of the present invention. In other words, the oil ring used in Example 2 has the specifications below. Note that more detailed settings of the oil ring used in Example 2 are shown in Table 2 below.

Oil ring radial depth (A) of oil return groove : 0.09 mm
Oil ring radial width (B) of web before formation of oil return groove : 0.49 mm
Oil ring axial width (X) of oil return groove : 0.65 mm
Opening width (C) of oil return hole : 1.50 mm
Opening height (D) of oil return hole : 0.40 mm
Ratio of tension to cylinder bore : 0.07 N/mm

Note that the oil ring with the ratio of tension to the cylinder bore of 0.07 N/mm was used in Example 2 to check the amount of oil consumption. In Table 1, an oil consumption amount ratio in Example 2 is shown as the ratio to an oil consumption amount taken as "1" which was obtained from an actual machine test using an oil ring (Comparative Example 4 illustrated below) not satisfying the condition of the present invention. The oil consumption amount ratio in Example 2 obtained as a result was 0.85.

### [Example 3]

In Example 3, the same engine as that in Example 2 was used. The engine was driven under the same drive conditions as those in Example 2 to check how a difference in shape or the like between oil ring main bodies to be used affects characteristics of oil rings (their oil consumption performance). Like Examples 1 and 2, a 1st ring, a 2nd ring, and an oil ring were used as piston rings. As the 1st ring, a ring made of 10Cr steel and having an axial width (h1) of 1.2 mm and a radial width (a1) of 2.9 mm which had been subjected to gas nitriding was used, as in Examples 1 and 2. As the 2nd ring, a ring made of an FC material and having an axial width (h1) of 1.2 mm and a radial width (a1) of 3.4 mm was used, as in Examples 1 and 2. As the oil ring of Example 3, a two-piece internal combustion engine oil ring was used, as in Examples 1 and 2. Like Examples 1 and 2, an oil ring whose oil ring main body was made of 8Cr steel and which had been subjected to gas nitriding (the thickness of a nitride layer that is indicated by F in Figure 7 was confirmed to be 100 µm) was used as the oil ring. A coil expander made of a material corresponding to SWOSC-V was used. The compositions of the 1st ring, 2nd ring, and oil ring used in Example 3 were set in the same manner as in Examples 1 and 2. Note that the oil ring used in Example 3 was different in shape from those in Examples 1 and 2.

In the oil ring used in Example 3, an axial width (h1) of the oil ring main body was set to 1.50 mm, an oil ring radial width (a1) was set to 1.70 mm, and an oil ring radial width (a12) of the oil ring after arrangement of the coil expander was set to 2.32 mm. In the oil ring used in Example 3, of the shape of an oil return groove formed so as to be continuous with a coil expander receiving recess, the outer peripheral shape in cross-section in an oil ring axial direction is composed of a straight line and a curved line continuous with the straight line, and the oil return groove includes a curved surface (having a radius of curvature of 0.09 mm) extending from the coil expander receiving recess so as to be continuous therewith. In the oil ring of Example 3, A/B is 0.30, where A is the oil ring radial depth of the oil return groove and B is the oil ring radial width of a web before formation of the oil return groove. The value of A/B is within the range of 0.05 to 0.50, which is the condition of the present invention. In other words, the oil ring used in Example 3 has the specifications below. Note that more detailed settings of the oil ring used in Example 3 are shown in Table 2 below.

Oil ring radial depth (A) of oil return groove : 0.17 mm
Oil ring radial width (B) of web before formation of oil return groove : 0.57 mm
Oil ring axial width (X) of oil return groove : 0.65 mm
Opening width (C) of oil return hole : 1.50 mm
Opening height (D) of oil return hole : 0.40 mm
Ratio of tension to cylinder bore : 0.07 N/mm

Note that the oil ring with the ratio of tension to the cylinder bore of 0.07 N/mm was used in Example 3 to check the amount of oil consumption. In Table 1, an oil consumption amount ratio in Example 3 is shown as the ratio to an oil consumption amount taken as "1" which was obtained from an actual machine test using an oil ring (Comparative Example 4 illustrated below) not satisfying the condition of the present invention. The oil consumption amount ratio in Example 3 obtained as a result was 0.85.

### [Comparative Examples]

### [Comparative Example 1]

Comparative Example 1 is used for comparison with Example 1. In Comparative Example 1, the same engine as that in Example 1 was used. The engine was driven under the same drive conditions as those in Example 1 to check the amount of oil consumption. Like Example 1, a 1st ring, a 2nd ring, and an oil ring were used in combination as piston rings in Comparative Example 1. The 1st ring and 2nd ring are the same as those used in Example 1. As the oil ring of Comparative Example 1, an oil ring with the same settings as those in Example 1 except for the shape of an oil return groove in an oil ring main body was used. In the oil ring of Comparative Example 1, although an oil return groove is formed in an oil ring main body, the oil return groove does not include a curved surface extending from a coil expander receiving recess so as to be continuous therewith. The oil ring used in Comparative Example 1 has the specifications below. Note that more detailed settings of the oil ring used in Comparative Example 1 are shown in Table 1 below together with Example 1.

Oil ring radial depth (A) of oil return groove : 0.04 mm
Oil ring radial width (B) of web before formation of oil return groove : 0.49 mm
Oil ring axial width (X) of oil return groove : 0.70 mm
Opening width (C) of oil return hole : 2.00 mm
Opening height (D) of oil return hole : 0.50 mm
Ratio of tension to cylinder bore : 0.24 N/mm

In the oil ring of Comparative Example 1, A/B is about 0.08, where A is the oil ring radial depth of the oil return groove and B is the oil ring radial width of a web before formation of the oil return groove. The value of A/B is within the range of 0.05 to 0.50, which is the condition of the present invention. Like Example 1, the oil ring with the ratio of tension to the cylinder bore of 0.24 N/mm was used in Comparative Example 1 to check the amount of oil consumption. In Table 1, an oil consumption amount ratio in Comparative Example 1 is shown as the ratio to an oil consumption amount taken as "1" which was obtained from an actual machine test using an oil ring (Comparative Example 2 illustrated below) not satisfying the condition of the present invention. The oil consumption amount ratio in Comparative Example 1 obtained as a result was 0.80.

### [Comparative Example 2]

Comparative Example 2 is used for comparison with Example 1. In Comparative Example 2, the same engine as that in Example 1 was used. The engine was driven under the same drive conditions as those in Example 1 to check the amount of oil consumption. Like Example 1, a 1st ring, a 2nd ring, and an oil ring were used in combination as piston rings in Comparative Example 2. The 1st ring and 2nd ring are the same as those used in Example 1. As the oil ring of Comparative Example 2, an oil ring with the same settings as those in Example 1 except that no oil return groove was formed in an oil ring main body was used. The oil ring used in Comparative Example 2 has the specifications below. Note that more detailed settings of the oil ring used in Comparative Example 2 are shown in Table 1 below together with Example 1.

Oil ring radial depth (A) of oil return groove : 0 mm
Oil ring radial width (B) of web before formation of oil return groove : 0.45 mm
Oil ring axial width (X) of oil return groove : 0 mm
Opening width (C) of oil return hole : 2.00 mm
Opening height (D) of oil return hole : 0.50 mm
Ratio of tension to cylinder bore : 0.20 N/mm

An oil ring in which, of the shape of an oil return groove, the outer peripheral shape in cross-section in an oil ring axial direction was composed only of a straight line was used as the oil ring of Comparative Example 2. In the oil ring of Comparative Example 2, A/B is 0, where A is the oil ring radial depth of the oil return groove and B is the oil ring radial width of a web before formation of the oil return groove. The value of A/B is outside the range of 0.05 to 0.50, which is the condition of the present invention. The oil ring with the ratio of tension to the cylinder bore of 0.20 N/mm was used in Comparative Example 2 to check the amount of oil consumption. Note that, as described above, an oil consumption amount ratio taken as "1" which was obtained from an actual machine test using the combination of piston rings in Comparative Example 2 is shown in Table 1.

### [Comparative Example 3]

Comparative Example 3 is used for comparison with Examples 2 and 3. In Comparative Example 3, the same engine as those in Examples 2 and 3 was used. The engine was driven under the same drive conditions as those in Examples 2 and 3 to check the amount of oil consumption. Like Examples 2 and 3, a 1st ring, a 2nd ring, and an oil ring were used in combination as piston rings in Comparative Example 3. The 1st ring and 2nd ring are the same as those used in Examples 2 and 3. As the oil ring of Comparative Example 3, an oil ring with the same settings as those in Example 2 except for the shape of an oil return groove in an oil ring main body was used. In the oil ring of Comparative Example 3, although an oil return groove is formed in an oil ring main body, the oil return groove does not include a curved surface extending from a coil expander receiving recess so as to be continuous therewith. The oil ring used in Comparative Example 3 has the specifications below. Note that more detailed settings of the oil ring used in Comparative Example 3 are shown in Table 2 below together with Examples 2 and 3.

Oil ring radial depth (A) of oil return groove : 0.09 mm
Oil ring radial width (B) of web before formation of oil return groove : 0.49 mm
Oil ring axial width (X) of oil return groove : 0.65 mm
Opening width (C) of oil return hole : 1.50 mm
Opening height (D) of oil return hole : 0.40 mm
Ratio of tension to cylinder bore : 0.07 N/mm

In the oil ring of Comparative Example 3, A/B is 0, where A is the oil ring radial depth of the oil return groove and B is the oil ring radial width of a web before formation of the oil return groove. The value of A/B is outside the range of 0.05 to 0.50, which is the condition of the present invention. Like Examples 2 and 3, the oil ring with the ratio of tension to the cylinder bore of 0.07 N/mm was used in Comparative Example 3 to check the amount of oil consumption. In Table 2, an oil consumption amount ratio in Comparative Example 3 is shown as the ratio to an oil consumption amount taken as "1" which was obtained from an actual machine test using an oil ring (Comparative Example 4 illustrated below) not satisfying the condition of the present invention. The oil consumption amount ratio in Comparative Example 3 obtained as a result was 0.87.

### [Comparative Example 4]

Comparative Example 4 is used for comparison with Examples 2 and 3. In Comparative Example 4, the same engine as those in Examples 2 and 3 was used. The engine was driven under the same drive conditions as those in Examples 2 and 3 to check the amount of oil consumption. Like Examples 2 and 3, a 1st ring, a 2nd ring, and an oil ring were used in combination as piston rings in Comparative Example 4. The 1st ring and 2nd ring are the same as those used in Examples 2 and 3. As the oil ring of Comparative Example 4, an oil ring with the same settings as those in Example 2 except that no oil return groove was formed in an oil ring main body was used. The oil ring used in Comparative Example 4 has the specifications below. Note that more detailed settings of the oil ring used in Comparative Example 4 are shown in Table 2 below together with Examples 2 and 3.

Oil ring radial depth (A) of oil return groove : 0 mm
Oil ring radial width (B) of web before formation of oil return groove : 0.49 mm
Oil ring axial width (X) of oil return groove : 0 mm
Opening width (C) of oil return hole : 1.50 mm
Opening height (D) of oil return hole : 0.40 mm
Ratio of tension to cylinder bore : 0.07 N/mm

In the oil ring of Comparative Example 4, A/B is 0, where A is the oil ring radial depth of the oil return groove and B is the oil ring radial width of a web before formation of the oil return groove. The value of A/B is outside the range of 0.05 to 0.50, which is the condition of the present invention. Like Examples 2 and 3, the oil ring with the ratio of tension to the cylinder bore of 0.07 N/mm was used in Comparative Example 4 to check the amount of oil consumption. Note that, as described above, an oil consumption amount ratio taken as "1" which was obtained from an actual machine test using the combination of piston rings in Comparative Example 4 is shown in Table 2.

### [Comparison of Examples with Comparative Examples]

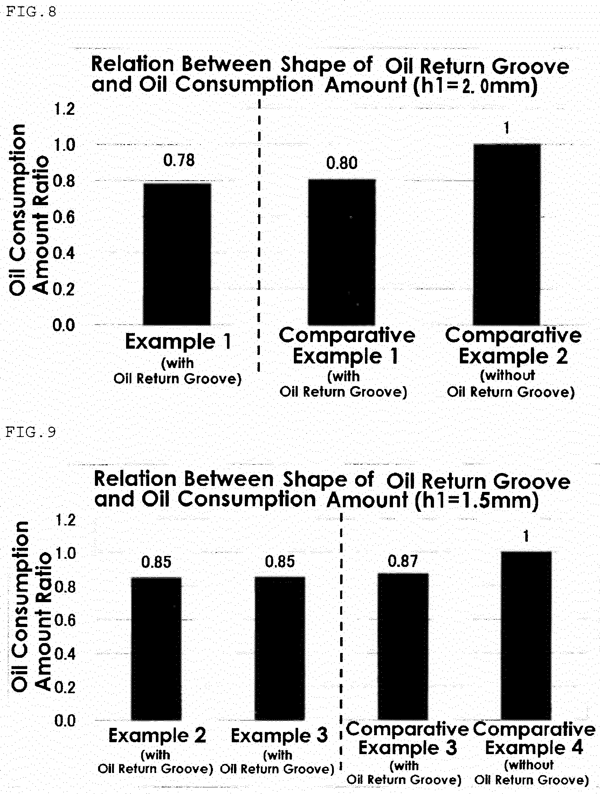

Comparison of Example 1 with Comparative Examples 1 and 2: Figure 8 is a graph showing the relation between the shape in cross-section in an oil ring axial direction of an oil return groove and an oil consumption amount ratio when an oil ring having an axial width of 2.00 mm was used. Figure 8 shows results of comparing oil consumption amounts of Example 1, Comparative Example 1, and Comparative Example 2 shown in Table 1 below, whose oil rings have different shapes. Each oil consumption amount ratio in Figure 8 is the ratio to the value taken as 1.00 of an oil consumption amount (g/h) when the oil ring (without an oil return groove) of Comparative Example 2 was used. The results are collectively shown in Figure 8 so as to be compared with each other. As can be seen from Figure 8, use of the oil ring of Example 1 resulted in the smallest oil consumption amount. In the oil ring, the oil return groove formed in the oil ring main body includes a curved surface (having a radius of curvature of 0.10 mm) extending from the coil expander receiving recess so as to be continuous therewith. Use of the oil ring of Comparative Example 1 resulted in the second smallest oil consumption amount. In the oil ring, although the oil return groove is formed in the oil ring main body, the oil return groove does not include a curved surface extending from the coil expander receiving recess so as to be continuous therewith. Use of the oil ring of Comparative Example 2 resulted in the largest oil consumption amount. In the oil ring, no oil return groove is formed.

**[Table 1]**

| | Example 1 (with oil return groove) | Comparative example 1 (with oil return groove) | Comparative example 2 (without oil return groove) |
|---|---|---|---|
| Axial width h1 (mm) of oil ring | 2.00 | 2.00 | 2.00 |
| Radial width a1 (mm) of oil ring main body | 2.00 | 2.00 | 2.00 |
| Radial width a12 (mm) of oil ring | 2.74 | 2.74 | 2.74 |
| Oil ring diameter (mm) | 86.00 | 86.00 | 86.00 |
| Oil ring tension/Cylinder bore (N/mm) | 0.24 | 0.24 | 0.20 |
| Radial depth A (mm) of oil ring | 0.04 | 0.04 | - |
| Ring radial width B (mm) of web before formation of oil return groove | 0.49 | 0.49 | 0.45 |
| Ring axial width X (mm) of oil return groove | 0.70 | 0.70 | - |
| Opening width C (mm) of oil return hole | 2.00 | 2.00 | 2.00 |
| Opening height D (mm) of oil return hole | 0.50 | 0.50 | 0.50 |
| Pitch E (mm) | 7.60 | 7.60 | 7.60 |
| Ratio A/B | 0.08 | 0.08 | - |
| Ratio C/(E-C) | 0.36 | 0.36 | 0.36 |
| Extending curved surface (Portion in contact with coil expander) | Present | Absent | - |
| Radius (mm) of curvature of extending curved surface | 0.10 | - | - |
| Radius r1 (mm) of curvature of coil expander receiving recess | 0.80 | 0.80 | 0.80 |
| Radius r2 (mm) of curvature of outer diameter of coil expander | 0.75 | 0.75 | 0.75 |
| Ratio r2/r1 | 0.94 | 0.94 | 0.94 |
| Oil consumption amount ratio | 0.78 | 0.80 | 1.00 |

The above results show that when an oil ring having an axial width of 2.00 mm is used, the oil consumption amount of the oil ring can be significantly reduced by forming an oil return groove in an oil ring main body. The results also show that if the relation of an oil ring radial depth A of the formed oil return groove with an oil ring radial width B of a web before the formation of the oil return groove satisfies the condition (A/B = 0.05 to 0.50) specified in the present invention, the effect of reducing the amount of oil consumption can be further improved. A result of comparison of Example 1 with Comparative Example 1 shows that it is more preferable in terms of reducing the amount of oil consumption that an oil return groove formed in an oil ring main body includes a curved surface extending from a coil expander receiving recess so as to be continuous therewith such that the extending curved surface has a radius of curvature (of 0.01 to 0.30 mm) that is a condition specified in the present invention.

Comparison of Examples 2 and 3 with Comparative Examples 3 and 4: Figure 9 is a graph showing the relation between the shape in cross-section in an oil ring axial direction of an oil return groove and an oil consumption amount ratio when an oil ring having an axial width of 1.50 mm was used. Figure 9 shows results of comparing oil consumption amounts of Example 2, Example 3, Comparative Example 3, and Comparative Example 4 shown in Table 2 below, whose oil rings have different shapes. Each oil consumption amount ratio in Figure 9 is the ratio to the value taken as 1.00 of an oil consumption amount (g/h) when the oil ring (without an oil return groove) of Comparative Example 4 was used. The results are collectively shown in Figure 9 so as to be compared with each other. As can be seen from Figure 9, use of the oil ring of Example 2 and use of the oil ring of Example 3 resulted in the smallest oil consumption amount. In each oil ring, the oil return groove formed in the oil ring main body includes a curved surface (having a radius of curvature of 0.09 mm) extending from the coil expander receiving recess so as to be continuous therewith. Use of the oil ring of Comparative Example 3 resulted in the second smallest oil consumption amount. In the oil ring, although the oil return groove is formed in the oil ring main body, the oil return groove does not include a curved surface extending from the coil expander receiving recess so as to be continuous therewith. Use of the oil ring of Comparative Example 4 resulted in the largest oil consumption amount. In the oil ring, no oil return groove is formed.

**[Table 2]**

| | Example 2 (with oil return groove) | Example 3 (with oil return groove) | Comparative example 3 (with oil return groove) | Comparative example 4 (without oil return groove) |
|---|---|---|---|---|
| Axial width h1 (mm) of oil ring | 1.50 | 1.50 | 1.50 | 1.50 |
| Radial width a1 (mm) of oil ring main body | 1.70 | 1.70 | 1.70 | 1.70 |
| Radial width a12 (mm) of oil ring | 2.14 | 2.32 | 2.14 | 2.14 |
| Oil ring diameter (mm) | 73.00 | 73.00 | 73.00 | 73.00 |
| Oil ring tension/Cylinder bore (N/mm) | 0.07 | 0.07 | 0.07 | 0.07 |
| Radial depth A (mm) of oil ring | 0.09 | 0.17 | 0.09 | - |
| Ring radial width B (mm) of web before formation of oil return groove | 0.49 | 0.57 | 0.49 | 0.49 |
| Ring axial width X (mm) of oil return groove | 0.65 | 0.65 | 0.65 | - |
| Opening width C (mm) of oil return hole | 1.50 | 1.50 | 1.50 | 1.50 |
| Opening height D (mm) of oil | 0.40 | 0.40 | 0.40 | 0.40 |
| Pitch E (mm) | 5.50 | 5.50 | 5.50 | 5.50 |
| Ratio A/B | 0.18 | 0.30 | 0.18 | - |
| Ratio C/(E-C) | 0.38 | 0.38 | 0.38 | 0.38 |
| Extending curved surface (Portion in contact with coil expander) | Present | Present | Absent | - |
| Radius (mm) of curvature of extending curved surface | 0.09 | 0.09 | - | - |
| Radius r1 (mm) of curvature of coil expander receiving recess | 0.60 | 0.60 | 0.60 | 0.60 |
| Radius r2 (mm) of curvature of outer diameter of coil expander | 0.55 | 0.55 | 0.55 | 0.55 |
| Ratio r2/r1 | 0.92 | 0.92 | 0.92 | 0.92 |
| Oil consumption amount ratio | 0.85 | 0.85 | 0.87 | 1.00 |

The above results show that even when an oil ring having an axial width of 1.50 mm is used, the oil consumption amount of the oil ring can be significantly reduced by forming an oil return groove in an oil ring main body, as in a case where a test is performed using the oil rings having an axial width of 2.00 mm. The results also show that if the relation of an oil ring radial depth A of the formed oil return groove with an oil ring radial width B of a web before the formation of the oil return groove satisfies the condition (A/B = 0.05 to 0.50) specified in the present invention, the effect of reducing the amount of oil consumption can be further improved. The oil consumption amount ratios of Example 2 where A/B is 0.18 and Example 3 where A/B is 0.30 are both 0.85. It is believed that there is no difference in impact on the amount of oil consumption as long as the condition (A/B = 0.05 to 0.50) specified in the present invention is satisfied. A result of comparison of Examples 2 and 3 with Comparative Example 1 shows that it is more preferable in terms of reducing the amount of oil consumption that an oil return groove formed in an oil ring main body includes a curved surface extending from a coil expander receiving recess so as to be continuous therewith such that the extending curved surface has a radius of curvature (of 0.01 to 0.30 mm) that is the condition specified in the present invention.

The above description has shown that the oil rings of the examples satisfying the conditions specified in the present invention produce the effect of reducing the amount of oil consumption, compared to the oil rings of the comparative examples not satisfying the conditions. Evidence that the dimensions of an oil ring main body are preferably set to fall within conditional ranges specified in the present invention will be provided by further performing the verification test below.

### [Test for Checking Stress Produced for Oil Ring Radial Width of Web Constituting Oil Ring Main Body]

In order to check the relation between the oil ring radial width of a web constituting an oil ring main body and produced stress, a load imposed on the oil ring when an engine was operated under the same operation conditions as those in the examples was estimated, and a stress σ produced when the load was imposed on an oil ring was measured. More specifically, the relation between an oil ring radial width B of the web constituting the oil ring main body before formation of an oil return groove and produced stress was calculated when the oil ring with a coil expander was mounted to a cylinder.

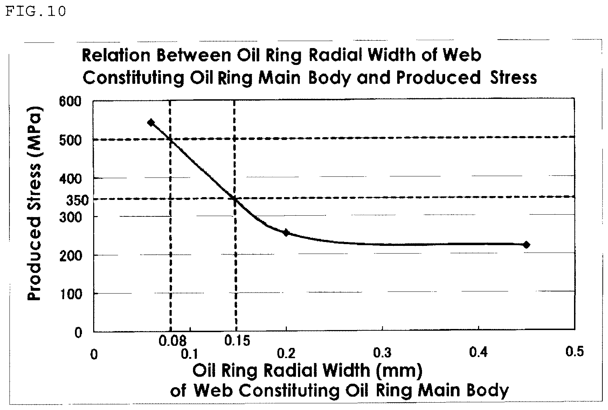

Figure 10 is a graph showing the relation between the oil ring radial width of a web constituting an oil ring main body and produced stress. Figure 10 shows a result of checking the relation between the oil ring radial width of the web constituting the oil ring main body and produced stress by performing a test based on the above-described stress measurement method. As shown in Figure 10, stress produced when the oil ring radial width of the web was 0.06 mm was about 550 MPa, stress produced when the oil ring radial width of the web was 0.20 mm was about 250 MPa, and stress produced when the oil ring radial width of the web was 0.45 mm was about 220 MPa. Figure 10 shows the obtained pieces of data connected by a smooth line.

In view of durability required for an internal combustion engine oil ring, produced stress is preferably not more than 500 MPa. Figure 10 shows that stress produced in an oil ring main body exceeds 500 MPa when the oil ring radial width of a web constituting an oil ring is less than about 0. 08 mm. As can be seen from the result, in view of durability required for an internal combustion engine oil ring, the oil ring radial width of a web constituting an oil ring main body needs to be not less than about 0. 08 mm. Note that an oil ring with an oil return groove formed in a web like an internal combustion engine oil ring according to the present invention needs to satisfy the condition of the present invention that "A/B = 0.05 to 0.50, where A is the oil ring radial depth of an oil return groove and B is the oil ring radial width of a web before formation of the oil return groove." If A/B is 0.50, the oil ring radial width B of the web constituting an oil ring main body before formation of the oil return groove computationally needs to be not less than about 0.16 mm. Note that in view of use under harsh conditions, such as conditions for a Diesel engine oil ring, stress produced in an internal combustion engine oil ring is more preferably not more than about 350 MPa from an empirical standpoint. Figure 10 shows that stress produced in an oil ring main body exceeds 350 MPa when the oil ring radial width of a web constituting an oil ring is less than about 0.15 mm. If A/B is 0.50, the oil ring radial width B of the web before formation of the oil return groove computationally needs to be not less than about 0.30 mm. As can be seen from the above, in view of use under harsh conditions, the oil ring radial width B of a web constituting an oil ring main body before formation of the oil return groove is more preferably not less than 0.30 mm in an internal combustion engine oil ring according to the present invention.

From the foregoing, in an internal combustion engine oil ring according to the present invention, the outer peripheral shape of an oil return groove formed so as to be continuous with an inner periphery of an oil ring main body is composed of a straight line and a curved line continuous with the straight line, as seen in cross-section in an oil ring axial direction. This ensures reduction in the amount of oil consumption when an internal combustion engine is driven. In the internal combustion engine oil ring according to the present invention, the oil return groove has a shape satisfying the conditions specified in the present invention. The configuration allows long-term stable retainment of the function of scraping excess oil from a cylinder inner wall surface and letting the excess oil flow down to an underside of a piston.

### [Industrial Applicability]

An internal combustion engine oil ring according to the present invention can be applied to every internal combustion engine. Use of the oil ring allows reduction in oil consumption when an internal combustion engine is driven and improvement in oil ring wear resistance. Simultaneously, the use allows stabilization of pressing force against a cylinder inner wall surface and increase in the possibility of oil ring design required to improve the functions. Thus, use of an internal combustion engine oil ring according to the present invention in an internal combustion engine for an automobile allows reduction in the frequency of oil supply, effective utilization of resources, and reduction in environmental load, which is desirable.

### [Reference Signs List]

1 internal combustion engine oil ring
2 oil ring main body
2a gap
2b coil expander receiving recess
2c outer peripheral groove
2d oil return groove
3 coil expander
4 web
5 first rail
6 second rail
7 oil return hole
10 piston
12 oil drain hole
20 cylinder
21 cylinder inner wall surface
A oil ring radial depth of oil return groove
B oil ring radial width of web before formation of oil return groove
C opening width of oil return hole
D opening height of oil return hole
E pitch of oil return holes
F thickness of nitride layer
G curved surface of oil return groove
X oil ring axial width of oil return groove
h1 axial width of oil ring main body

## Claims

1. An internal combustion engine oil ring (1) comprising an oil ring main body (2) having a generally I-shape in cross-section in an oil ring axial direction and a coil expander (3) arranged on the inner periphery side of the oil ring main body (2),
the oil ring main body (2) being composed of a first rail (5) sliding on a cylinder inner wall surface (21), a second rail (6), and a web (4) having a plurality of oil return holes (7) for letting oil scraped from the cylinder inner wall surface (21) by the first rail (5) and second rail (6) flow down to an underside of a piston (10),
the oil ring main body (2) including, along an inner peripheral surface, a coil expander receiving recess (2b) having a generally semicircular shape in cross-section in the oil ring axial direction,
the inner peripheral surface of the coil expander receiving recess (2b) having an oil return groove (2d) formed along an inner peripheral direction for smoothly returning scraped oil to the underside of the piston (10),
a cross-section shape of the oil return groove (2d) being composed of a straight line and a curved line continuous with the straight line in cross-section in the oil ring axial direction.

2. The internal combustion engine oil ring (1) according to claim 1, wherein r2/r1 is 0.8 to less than 1.0, where r1 is a radius of curvature in cross-section in the oil ring axial direction of the coil expander receiving recess (2b) in the oil ring main body (2) and r2 is a radius of curvature in cross-section in the oil ring axial direction of the coil expander (3).

3. The internal combustion engine oil ring (1) according to claim 1 or 2, wherein A/B is 0.05 to 0.50, where A is an oil ring radial depth of the oil return groove (2d) and B is an oil ring radial width of the web before formation of the oil return groove (2d) in the oil ring main body (2).

4. The internal combustion engine oil ring (1) according to any one of claims 1 to 3, wherein the oil ring radial width B of the web constituting the oil ring main body (2) before formation of the oil return groove (2d) is not less than 0.3 mm.

5. The internal combustion engine oil ring (1) according to any one of claims 1 to 4, wherein the oil return holes (7) formed in the web (4) constituting the oil ring main body (2) have an opening width of 0.5 mm to 5.0 mm in a circumferential direction of the oil ring main body (2) and an opening height of 0.2 mm to 0.8 mm along the oil ring axial direction.

6. The internal combustion engine oil ring (1) according to any one of claims 1 to 5, wherein an oil ring axial width h1 of the oil ring main body (2) is 1.0 mm to 2.5 mm.

7. The internal combustion engine oil ring (1) according to any one of claims 1 to 6, wherein the ratio of tension to a cylinder bore of the oil ring (1) is 0.05 N/mm to 0.5 N/mm.

8. The internal combustion engine oil ring (1) according to any one of claims 1 to 7, wherein, of a curved line in cross-section in the oil ring axial direction of the oil return groove (2d) formed in the oil ring main body (2), a curved line extending from the coil expander receiving recess (2b) so as to be continuous with the coil expander receiving recess (2b) has a radius of curvature of 0.01 to 0.30 mm.

9. The internal combustion engine oil ring (1) according to any one of claims 1 to 8, wherein C/(E-C) is 0.1 to 1.2, where E is the pitch of the oil return holes (7) in the web (4) constituting the oil ring main body (2) in a circumferential direction of the web and C is a length in the circumferential direction of the web of the oil return holes (7).

## Patentansprüche

1. Ein Ölring (1) für einen Verbrennungsmotor, der einen Ölringhauptkörper (2) umfasst, der im Querschnitt im Wesentlichen eine I-Form in einer axialen Richtung des Ölrings aufweist, und einen Spulenexpander (3), der an der inneren Umfangsseite des Ölringhauptkörpers (2) angeordnet ist,
wobei der Ölringhauptkörper (2) aus einer ersten Schiene (5), die auf einer Zylinderinnenwandfläche (21) gleitet, einer zweiten Schiene (6) und einer Bahn (4) besteht, die eine Vielzahl von Ölrückführlöchern (7) zum Ablassen von Öl aufweist, das von der Zylinderinnenwandfläche (21) durch die erste Schiene (5) und die zweite Schiene (6) abgekratzt wird, welches zu einer Unterseite eines Kolbens (10) abfließt,
wobei der Ölringhauptkörper (2) entlang einer Innenumfangsfläche eine Spulenexpander-Aufnahmeaussparung (2b) aufweist, die im Querschnitt im Wesentlichen eine Halbkreis-Form in der axialen Richtung des Ölrings aufweist;
wobei die Innenumfangsfläche der Spulenexpander-Aufnahmeaussparung (2b) eine Ölrückführungsnut (2d) aufweist, die entlang einer Innenumfangsrichtung ausgebildet ist, um abgekratztes Öl gleichmäßig zur Unterseite des Kolbens (10) zurückzuführen, eine Querschnittsform der Ölrückführungsnut (2d), die aus einer geraden Linie und einer gekrümmten Linie besteht, die ununterbrochen mit der geraden Linie im Querschnitt in der axialen Richtung des Ölrings ist.

2. Der Ölring (1) für einen Verbrennungsmotor nach Anspruch 1, wobei r2/r1 0,8 bis weniger als 1,0 ist, wobei r1 ein Krümmungsradius im Querschnitt in der axialen Richtung des Ölrings der Spulenexpander-Aufnahmeaussparung (2b) in dem Ölringhauptkörper (2) ist und r2 ein Krümmungsradius im Querschnitt in der axialen Richtung des Ölrings des Spulenexpanders (3) ist.

3. Der Ölring (1) für einen Verbrennungsmotor nach Anspruch 1 oder 2, wobei A/B 0,05 bis 0,50 ist, wobei A eine radiale Ölringtiefe der Ölrückführungsnut (2d) ist und B eine radiale Ölringbreite des Stegs vor der Ausildung der Ölrückführungsnut (2d) im Ölringhauptkörper (2) ist.

4. Der Ölring (1) für einen Verbrennungsmotor nach einem der Ansprüche 1 bis 3, wobei die radiale Ölringbreite B des Stegs, der den Ölringhauptkörper (2) bildet, vor der Ausbildung der Ölrückrückführungsnut (2d) nicht weniger als 0,3 mm ist.

5. Der Ölring (1) für einen Verbrennungsmotor nach einem der Ansprüche 1 bis 4, wobei die Ölrückführlöcher (7), die in dem Steg (4) ausgebildet sind, der den Ölringhauptkörper (2) bildet, eine Öffnungsbreite von 0,5 mm bis 5,0 mm in einer Umfangsrichtung des Ölringhauptkörpers (2) aufweisen und eine Öffnungshöhe von 0,2 mm bis 0,8 mm entlang der axialen Richtung des Ölrings.

6. Der Ölring (1) für einen Verbrennungsmotor nach einem der Ansprüche 1 bis 5, wobei eine axiale Ölringbreite h1 des Ölringhauptkörpers (2) 1,0 mm bis 2,5 mm beträgt.

7. Der Ölring (1) für einen Verbrennungsmotor nach einem der Ansprüche 1 bis 6, wobei das Verhältnis der Spannung zu einer Zylinderbohrung des Ölrings (1) 0,05 N/mm bis 0,5 N/mm beträgt.

8. Der Ölring (1) für einen Verbrennungsmotor nach einem der Ansprüche 1 bis 7, wobei eine gekrümmte Linie im Querschnitt in der axialen Richtung des Ölrings der Ölrückführungsnut (2d) in dem Ölringhauptkörper (2) ausgebildet ist, eine gekrümmte Linie, die sich von der Spulenexpander-Aufnahmeaussparung (2b) erstreckt, um mit der Spulenexpander-Aufnahmeaussparung (2b) ununterbrochen zu sein, einen Krümmungsradius von 0,01 bis 0,30 mm aufweist.

9. Der Ölring (1) für einen Verbrennungsmotor nach einem der Ansprüche 1 bis 8, wobei C/(E-C) 0,1 bis 1,2 beträgt, wobei E die Steigung der Ölrücklauflöcher (7) in dem Steg (4) ist, was den Ölringhauptkörper (2) in einer Umfangsrichtung des Stegs darstellt und C eine Länge in der Umfangsrichtung des Stegs der Ölrückführlöcher (7) ist.

## Revendications

1. Segment racleur pour moteur à combustion interne (1) comprenant un corps principal de segment racleur (2) ayant une section transversale généralement en forme de I dans une direction axiale du segment racleur et un boudin d'expansion (3) disposé sur le côté périphérie intérieure du corps principal de segment racleur (2),
le corps principal de segment racleur (2) étant composé d'un premier rail (5) coulissant sur une surface de paroi intérieure de cylindre (21), d'un second rail (6) et d'une âme (4) comportant plusieurs trous de retour d'huile (7)) pour laisser passer l'huile raclée de la surface de paroi intérieure (21) du cylindre par le premier rail (5) et le second rail (6) s'écouler jusqu'à la face inférieure d'un piston (10),
le corps principal de segment racleur (2) comprenant, le long d'une surface périphérique interne, un évidement de réception (2b) du boudin d'expansion de section généralement semi-circulaire en coupe transversale dans la direction axiale du segment racleur,
la surface périphérique interne de l'évidement de réception (2b) du boudin d'expansion ayant une rainure de retour d' huile (2d) formée le long d'une direction périphérique intérieure pour renvoyer de manière fluide l'huile raclée vers la face inférieure du piston (10),
une forme de section transversale de la rainure de retour d'huile (2d) étant composée d'une ligne droite et
une ligne courbe continue avec la ligne droite en coupe transversale dans la direction axiale de segment racleur.

2. Segment racleur pour moteur à combustion interne (1) selon la revendication 1, dans laquelle r2/r1 est 0,8 à moins de 1,0, où r1 est un rayon de courbure en section transversale dans la direction axiale de segment racleur de l'évidement de réception (2b) du boudin d'expansion dans le corps principal (2) de segment racleur et r2 est un rayon de courbure en coupe transversale dans la direction axiale de segment racleur du boudin d'expansion (3).

3. Segment racleur pour moteur à combustion interne (1) selon les revendications 1 ou 2, dans laquelle A/B vaut 0,05 à 0,50, où A est la profondeur radiale de segment de racleur de la rainure de retour d'huile (2d) et B est la largeur radiale de segment racleur de l'âme avant la formation de la rainure de retour d'huile (2d) dans le corps principal de segment racleur (2).

4. Segment racleur pour moteur à combustion interne (1) selon l'une quelconque des revendications 1 à 3, dans laquelle la largeur radiale de segment racleur B de l'âme constituant le corps principal de segment racleur (2) avant la formation de la rainure de retour d'huile (2d) n'est pas inférieur à 0,3 mm.

5. Segment racleur pour moteur à combustion interne (1) selon l'une quelconque des revendications 1 à 4, dans laquelle les trous de retour d'huile (7) formés dans l'âme (4) constituant le corps principal (2) de segment racleur ont une largeur d'ouverture de 0,5 mm à 5,0 mm dans la direction circonférentielle du corps principal (2) de segment racleur et une hauteur d'ouverture de 0,2 mm à 0,8 mm le long de la direction axial du segment racleur.

6. Segment racleur pour moteur à combustion interne (1) selon l'une quelconque des revendications 1 à 5, dans laquelle la largeur axiale de segment racleur h1 du corps principal (2) de segment racleur est de 1,0 mm à 2,5 mm.

7. Segment racleur pour moteur à combustion interne (1) selon l'une quelconque des revendications 1 à 6, dans laquelle le rapport de la tension à l'alésage du cylindre du segment racleur (1) est de 0,05 N/mm à 0,5 N/mm.

8. Segment racleur pour moteur à combustion interne (1) selon l'une quelconque des revendications 1 à 7, dans laquelle une ligne courbe en coupe transversale dans la direction axiale de segment racleur de la rainure de retour d'huile (2d) formée dans le corps principal (2) de segment racleur, une ligne courbe s'étendant depuis l'évidement de réception (2b) du boudin d'expansion de manière à être continue avec l'évidement de réception (2b) du boudin d'expansion a un rayon de courbure de 0,01 à 0,30 mm.

9. Segment racleur pour moteur à combustion interne (1) selon l'une quelconque des revendications 1 à 8, dans laquelle C/(E-C) est de 0,1 à 1,2, où E est le pas des trous de retour d'huile (7) dans l'âme (4) constituant le corps principal (2) de segment racleur dans une direction circonférentielle de l'âme et C est une longueur dans la direction circonférentielle de l'âme des trous de retour d'huile (7).
